# EUROPÄISCHE PATENTSCHRIFT

(11) **EP 2 057 316 B1**
(45) Veröffentlichungstag und Bekanntmachung des Hinweises auf die Patenterteilung: **16.10.2013**
(21) Anmeldenummer: 07786430.4
(22) Anmeldetag: 30.07.2007
(51) Int. Cl.: C09D 151/00, C09D 153/00, C08L 51/00, D21H 21/20, C08L 53/00, D21H 17/46

(54) **PAPIERERZEUGNIS UND VERFAHREN ZU DESSEN HERSTELLUNG SOWIE DESSEN VERWENDUNG**
PAPER PRODUCT AND METHOD FOR THE PRODUCTION AND USE THEREOF
PRODUIT EN PAPIER ET PROCÉDÉ POUR SA FABRICATION, AINSI QUE SON UTILISATION

(30) Priorität: 31.08.2006 DE 102006040771
(43) Veröffentlichungstag der Anmeldung: 13.05.2009
(73) Patentinhaber: SCA Hygiene Products GmbH, 68305 Mannheim (DE)
(72) Erfinder: STORSBERG, Joachim, 55286 Wörrstadt (DE); LASCHEWSKY, André, 14469 Potsdam (DE); EICHHORN, Stephan, 64579 Gernsheim (DE); STAPEL, Siegfried, 68307 Mannheim (DE)
(74) Vertreter: Pfenning, Meinig & Partner GbR
(86) Internationale Anmeldenummer: PCT/EP2007/006729
(87) Internationale Veröffentlichungsnummer: WO 2008/025426

(56) Entgegenhaltungen:
- EP-A- 0 343 850
- WO-A-00/40639
- WO-A-96/33310
- WO-A-2006/015698
- DE-A1- 19 515 943
- DE-A1- 19 537 088
- DE-A1- 19 640 205
- DE-T2- 69 814 359

## Beschreibung

Die Erfindung betrifft ein Verfahren zur Herstellung flächiger Papiererzeugnisse mit erhöhter relativer Nassreißfestigkeit und Weichheit aus einer Zellstoffsuspension, bei der der Zellstoffsuspension ein Blockcopolymer zugesetzt wird und/oder das Papiererzeugnis während seiner Herstellung oder nachträglich mit dem Blockcopolymer behandelt wird. Ebenso betrifft die Erfindung ein derart hergestelltes Papiererzeugnis. Verwendung finden derartige Papiererzeugnisse insbesondere als Tissue-Produkte.

Die bei der Papierherstellung verwendeten Cellulosefasern sind negativ geladen. Für eine einfache und wirtschaftliche, dem Fachmann bekannten Papierherstellungsmethode ist es am günstigsten, wenn Behandlungschemikalien, z.B. Nassfestmittel, direkt zu der wässrigen Zellstoffsuspension (Pulpe) dosiert wird, mit der dann das Papier hergestellt wird. Im nachfolgenden sei der technische Tissue-Herstellungsprozess kurz erläutert. Die wässrige Zellstoffpulpe wird im technischen Prozess dann auf die Maschinensiebe gegeben, dort formiert und teilentwässert und gelangt anschließend in die Trockenpartie der Tissuemaschine. Der sog. Yankee-Zylinder hat eine Oberflächentemperatur von etwa 140 °C, darüber befindet sich eine Gastrocknung mit Haubentemperaturen um ca. 450 °C. Während einer extrem kurzen Kontaktzeit von wenigen Milli-Sekunden am Zylinder beginnt der Aushärtungsprozess der Nassfestmittel, der während der anschließenden Lagerung der fertigen Tissuebahn abgeschlossen wird (sog. "Nachreifung").

Da die bei der Papierherstellung verwendeten Cellulosefasern negativ geladen sind, muss ein potentielles Nassfestmittel kationisch (positiv geladen) und wasserlöslich bzw. wasserdispergierbar sein, damit es bei der Anwendung im wässrigen Pulpenmedium auf die Cellulosefaser aufziehen kann. Als derzeitiger Stand der Wissenschaft und Technik wird die Verwendung konventioneller Nassfestmittel in der Papier- bzw. Tissueindustrie angesehen, die auf Epichlorhydrin oder auf Polyacrylamid basieren. Diese Nassfestmittel werden üblicherweise bei Haushaltstüchern in Mengen von 8 bis 10 kg/Tonne zugesetzt. Die Zellulosefasern des Papiers oder Tissues halten im trockenen Zustand im Netzwerk eines Blattes durch Faser-Faser-Kontaktstellen zusammen, die auf van-der Waals- bzw. Wasserstoffbrückenbindungen beruhen. Diese Bindungen sind sehr Wasser-sensitiv, d.h. je feuchter das Tuch wird, desto lockerer werden diese Bindungen. Um nun sog. nassfeste Papiere, wie z.B. Küchen- bzw. Haushaltstücher oder auch Hygienepapiere, herstellen zu können, werden Nassfestmittel zugesetzt, welche die Aufgabe haben, Bindungen zu formieren, die gegen Wasser zumindest zeitweise beständig sind. Nach dem gegenwärtigen Stand der Technik stehen verschiedene chemisch basierende polymere Nassfestmittel in der Papier- bzw. Tissueherstellung zur Verfügung, die beispielsweise in "Papermaking Chemistry" (book 4, ISBN: 9789525216042, Editor: Leo Neimo, Published in cooperation with the Finnish Paper Engineers' Association and TAPPI, pp 288-301) beschrieben sind. Zum Einsatz kommen überwiegend Melamin-Formaldehydharze (MF), wie beispielsweise in US 4,461,858 beschrieben, und kationische Polymere auf Basis von Polyamid-Epichlorhydrin und Polyamidin-Epichlorhydrin (PAE), wie beispielsweise in US 2,926,116, US 2,926,154, US 3,733,290, US 4,566,943, 4,605,702 beschrieben.

Nachteil bei den vorgenannten Nassfestmitteln ist zum einen, dass das behandelte Tissue zwar eine erhöhte Nassfestigkeit hat, dies aber mit der Folge einer verringerten Weichheit. Dies muss dann durch eine zusätzliche mechanische Behandlung des Tissues erreicht werden. Ein weiterer Nachteil der PAE's ist der herstellungsbedingte Gehalt an organischen Halogenverbindungen. WO 00/40639 beschreibt ein PAE-basierendes Nassfestmittel mit niedrigem Gehalt an organisch gebundem Chlor. Weiterhin werden in der DE 196 40 205 A1 wasserdispergierbare Nassfestmittel auf Polyisocyanatbasis beschrieben, welche durch Umsetzung der Ausgangskomponenten Polyisocyanat , Polyalkylenoxidpolyetheralkohol eines quaternierten Aminopolyalkylenoxidpolyetheralkohols, sowie gegebenenfalls weiterer Hilfs- und Zusatzstoffe erhalten werden.

Ferner ist aus der DE 698 14 359 T2 bekannt, dass z.B. Polyethylenimin zu den temporären Nassfestmitteln gehört. Weiterhin ist dem Fachmann bekannt, dass Polymere, die einen niedrigen Glasübergangspunkt (Raumtemperatur oder darunter) besitzen, weiche Eigenschaften besitzen. DE 689 16 860 beschreibt ausführlich ein Verfahren zur Herstellung aufsaugender Strukturen, bei denen die absorbierenden Strukturen aus gemischten Papierrohstoffen, von denen einer mit einem Latex mit Elastomerkern behandelt wird, hergestellt werden. Hierbei wird die Weichheit durch den weichen Gummi-Latex erreicht. Damit die Latices im Nassverfahren auf die Cellulosefaser aufziehen, haben diese eine polymere Hülle auf Basis von Oleyl-Polyethoxylat welches eine quaternäre funktionelle (trimethyl)-Ammonium-Gruppe an dem Abschlussende der Ethoxylat-Kette trägt. Nachteilig bei diesem Verfahren ist jedoch, dass die weichen Latices von hydrophober (=wasserabweisender) Natur sind und somit das Aufsaugvermögen des daraus hergestellten Papieres bei einer einfachen "one batch"-Anwendung negativ beeinflussen. Darum muss bei diesem Verfahren mit verschiedenen Pulpen gearbeitet werden, wobei nur eine mit dem Latex behandelt wird. In einem weiteren Schritt wird die mit Latex behandelte Zellstoffsuspension mit einer unbehandelten Pulpe vermischt, um so die wasseraufsaugende Wirkung des Papieres zu erreichen. WO 96/333 10beschreibt ein Verfahren zur Herstellung von weich-gekrepptem Tissue, welches durch einen speziell geführten Herstellungsprozess, vornehmlich durch eine mechanische Behandlung, erhalten wird.

Ausgehend hiervon war es Aufgabe der vorliegenden Erfindung, die aus dem Stand der Technik bekannten Probleme zu überwinden. So war es ein Ziel, die Nassfähigkeit von Papiererzeugnissen zu erhöhen, ohne negative Auswirkungen auf die Weichheit des Produkts in Kauf nehmen zu müssen. Ebenso sollte die Saugfähigkeit des Papiererzeugnisses nicht negativ beeinflusst werden. Eine weitere Aufgabe der vorliegenden Erfindung bestand darin, eine möglichst einfache Anwendung der Vorbehandlungschemikalien in der Zellstoffpulpe zu ermöglichen und eine ökologisch unbedenkliche Behandlungschemikalie bereitzustellen.

Diese Aufgabe wird durch das Verfahren mit den Merkmalen des Anspruchs 1 sowie durch das Papiererzeugnis mit den Merkmalen des Anspruchs 14 gelöst. Die weiteren abhängigen Ansprüche stellen vorteilhafte weiterbildungen dar. In Anspruch 29 wird eine erfindungsgemäße Verwendung aufgeführt.

Erfindungsgemäß wird ein Verfahren zur Herstellung flächiger Papiererzeugnisse mit erhöhter relativer Nassreißfestigkeit und Weichheit aus einer Zellstoffsuspension bereitgestellt, bei der der Zellstoffsuspension ein Blockcopolymer mit den Blöcken A und B zugesetzt wird und/oder das Papiererzeugnis während seiner Herstellung oder nachträglich mit dem Blockcopolymer behandelt wird. Besonderes Merkmal der vorliegenden Erfindung ist es, dass A ein Segment mit mindestens einer kupplungsfähigen Gruppe für Cellulose ist und ein gewichtsmittleres Molekulargewicht im Bereich von 300 bis 3000000 g/mol aufweist und B ein Polyalkylenglykol-Segment der allgemeinen Formel I darstellt, 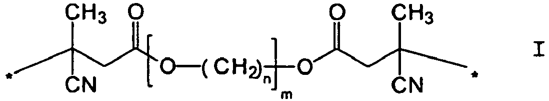 mit n = 2 bis 6 und wobei m so gewählt ist, dass das gewichtsmittlere Molekulargewicht des Segments B im Bereich von 400 bis 50000 g/mol liegt.

Eine einfache Anwendung bei der Herstellung von Papiererzeugnissen, idealerweise in der wässrigen Zellstoffsuspension, setzt voraus, dass die zur Behandlung eingesetzten Polymersysteme wasserlöslich bzw. wasserdispergierbar sind. Diese Anforderungen konnten durch die Anwendung von Copolymersystemen, die aus Weichsegmenten, d.h. flexible Polymerblöcken mit niedrigem T_{g}, und Haftsegmenten, d.h. Polymerblöcken mit kationischer Struktur, auch in Kombination mit chemisch reaktiven Gruppen, aufgebaut sind, erfüllt werden. Haftsegmente sind erforderlich, um ein Aufziehen der Chemikalien auf die geladene Zellstofffaser zu erreichen, während die reaktiven Segmente beim weiteren Verarbeitungsprozess durch eine chemische Reaktion eine kovalente Verknüpfung der Chemikalie mit der Faser sowie von Fasern untereinander bewirkt und somit die Nassfestigkeit des Papiererzeugnisses erhöht. Gleichzeitig bewirkt das Weichsegment eine Elastizität zwischen den Fasern, sodass die Zunahme der Nassfestigkeit nicht auf Kosten der Weichheit realisiert wird, wie dies bei den bisher aus dem Stand der Technik bekannten Systemen der Fall ist.

Überraschenderweise konnte nun festgestellt werden, dass die erfindungsgemäß bereitgestellten Blockcopolymere in einfachster weise anwendbar sind, wobei auch ihre Herstellung auf einfachste Weise möglich ist. Die Synthesestrategie besteht darin, eine Precursor-Verbindung, die weiche Polyalkylenglykol-Segmente enthält, in einfacher Weise zu Blockcopolymeren durch Copolymerisation mit geeigneten Monomeren umzusetzen. Eine besonders einfache Synthese ist hierbei durch den Einsatz von PEG-Azoinitiatoren möglich, welche thermisch in polymere PEG-Biradikale zerfallen und somit zur Bildung von beispielsweise A-B-A-Blockcopolymeren, die besonders bevorzugt sind, führt.

Die Herstellung solcher Makroazoinitiatoren (MAI) ist beispielsweise bei Takahashi et al., Journal of Polymer Science, Part A, Polymer Chemistry, Vol. 35, 69-76 (1997) oder auch bei Smith, "Die Makromolekulare Chemie 1003", 301-303 (1967) beschrieben und Stand der Technik.

Das Segment A ausgewählt aus der Gruppe bestehend aus Glycidyl, Benzylhalogenid, α-Halogenacyl, Isocyanat, Anhydrid, Azid, Tosylat und Mesylat. Im Folgenden sind einige beispielhafte Vertreter aufgeführt: 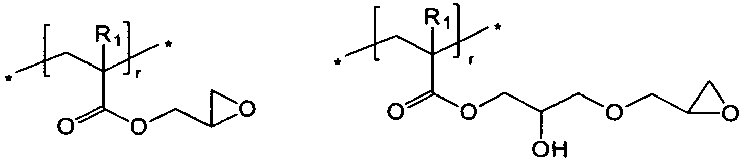 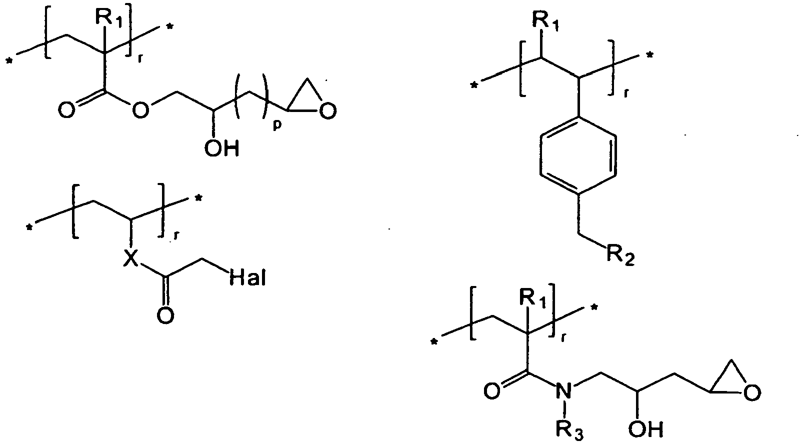 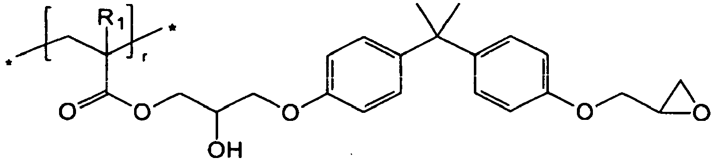 mit p = 1 bis 12, r = 3 bis 3000, R₁ = H oder CH₃ und R₂ = Halogen, Tosylat oder Mesylat, R₃ = H, wenn R₁ = CH₃ und R₃ = CH₃, wenn R₁ = H sowie X = O oder NR₄ mit R₄ = H oder CH₃.

Als eine weitere erfindungsgemäße Variante kann das Segment A als Homopolymer aus einem Monomer der allgemeinen Formel II gebildet sein, 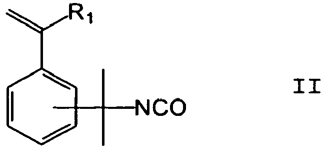 wobei R₁ = H ist. Wenn R₁ = CH₃ ist, so kann das Monomer der allgemeinen Formel II zusammen mit mindestens einem weiteren radikalisch polymerisierbaren Comonomer ausgewählt aus der Gruppe bestehend aus aliphatischen und aromatischen Methacrylsäureestern, aliphatischen und aromatischen Acrylamiden und Styrol, die auch mit NR₅, OR₅ und/oder COOR₅ mit R₅ = C₁-C₁₂-Alkyl oder Aryl, substitutiert sein können, copolymerisiert werden. Dies ist ebenso für R₁ = H möglich. Der aromatische Substituent kann in Formel II in ortho-, meta- oder para-Stellung angeordnet sein.

Grundsätzlich sind hier alle Methacrylsäureester, Acrylamide und Styrole einsetzbar, die mit den genannten Resten substituiert sind, bei denen R₅ nicht Wasserstoff ist.

Das gewichtsmittlere Molekulargewicht des Segmentes A liegt vorzugsweise im Bereich von 1.000 bis 1.000.000 g/mol, während das gewichtsmittlere Molekulargewicht des Segmentes B vorzugsweise im Bereich von 400 bis 10.000 g/mol liegt.

In einer weiteren bevorzugten Variante kann das Blockcopolymer zusätzlich mit einem polymeren Amin, insbesondere einem Polyethylenimin und/oder einem Polyvinylamin gekuppelt sein. Hierbei ist ein Polyethylen-Segment der allgemeinen Formel III 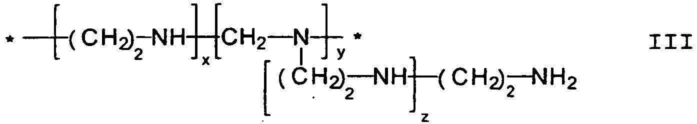 das unter Bildung eines Pfropfcopolymers gekuppelt wird, wobei x, y und z so gewählt werden, dass das gewichtsmittlere Molekulargewicht im Bereich von 500 bis 3000000 g/mol, insbesondere 500 bis 1000000 g/mol liegt, besonders bevorzugt.

Eine andere besonders bevorzugte Variante betrifft die Kupplung mit Poly-4-vinylpyridin.

Im Falle der zuvor beschriebenen Kupplung mit einem polymeren Amin liegt ein Pfropfcopolymer vor, das ein Rückgrat aus dem polymeren Amin und Pfröpfe aus dem Blockcopolymer aufweist. Aber auch die umgekehrte Variante ist möglich, dass das Pfropfcopolymer aus einem Rückgrat aus dem Blockcopolymer und Pfröpfen aus dem polymeren Amin besteht.

Vorzugsweise ist das Polyalkylenglykol Polyethylenglykol.

Erfindungsgemäß wird ebenso ein Papiererzeugnis mit erhöhter relativer Nassfestigkeit und Weichheit bereitgestellt, das Cellulosefasern enthält, die mit einem Blockcopolymer mit den Blöcken A und B der zuvor beschriebenen Struktur vernetzt sind.

Verwendung finden derartige Papiererzeugnisse insbesondere als Tissue-Produkte.

Anhand der nachfolgenden Figur und Beispiele soll der erfindungsgemäße Gegenstand näher erläutert werden, ohne diesen auf die hier gezeigten speziellen Ausführungsformen einschränken zu wollen.

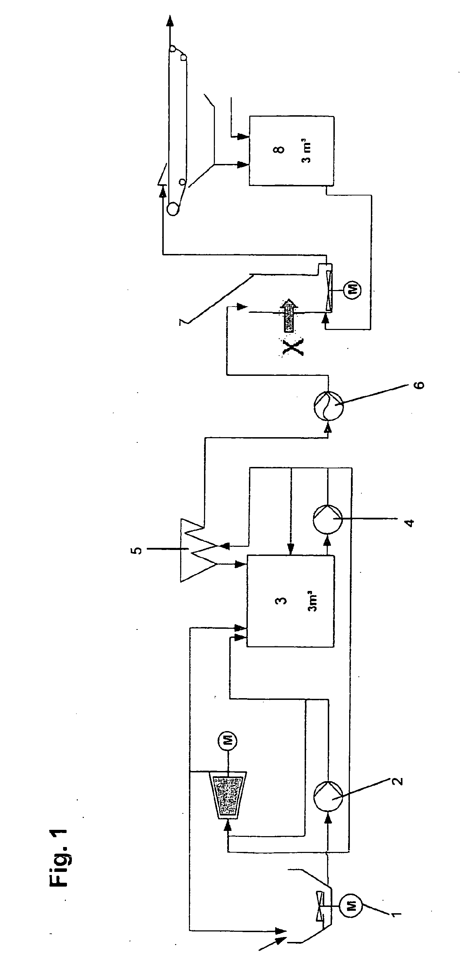

Fig. 1 zeigt anhand einer schematischen Darstellung den Ablauf des erfindungsgemäßen Herstellungsprozesses für Papiererzeugnisse.

### Beispiel 1

### Synthese von Poly(Glycidylmethacrylat)-Block-Poly(Ethylenglykol)-Block-Poly(Glycidylmethacrylat)

Es wurden die in Tabelle 1 aufgeführten MakroAzoinitiatoren eingesetzt.

**Tabelle 1**

| Makro-Azoinitiator | Molekulargewicht [g/mol] | Molekulargewicht des Segments | Mol Azogruppe pro 1 g |
|---|---|---|---|
| VPE-0201 | 15,000-30,000 | 2,000 | 0,45 mmol/g (1/14) |
| VPE-0401 | 25,000-40,000 | 4,000 | 0,24 mmol/g (1/25) |

### Beispiel 1.1

### Triblock-Copolymer aus VPE-0401 und Glycidylmethacrylat (1:1)

Makro-Azoinitiator VPE-0401 [WAKO], 20 g 1,4-Dioxan [ACROS, p.a., stabilized] und anschließend 7,64 g Glycidylmethacrylat [ALDRICH, 97 %] werden in einen Schlenkkolben eingewogen. Nach Entgasen mit N₂ wird der Kolben mit einem Septum verschlossen und die Reaktionslösung unter Rühren auf dem Ölbad bei 85 °C über Nacht zur Polymerisation gebracht. Nach dem Abkühlen auf Raumtemperatur überführt man das Produkt unter Rühren in Diethylether (Glycidylmethacrylat ist in Et₂O löslich, das Produkt in Dioxan). Das Polymer wird in Petri-Schalen im Vakuum-Trockenschrank über P₂O₅ vom Restlösemittel befreit. Die Ausbeute beträgt 93 % der Theorie.

### Beispiel 1.2

### Triblock-Copolymer aus VPE-0201 und Glycidylmethacrylat (1:1)

8,0 g Macroazoinitiator VPE-0201 [WAKO], 20 g 1,4-Dioxan [ACROS, p.a., stabilized] und anschließend 8,0 g Glycidylmethacrylat [ALDRICH, 97 %] werden in einen Schlenkkolben eingewogen. Nach Entgasen mit N₂ wird der Kolben mit einem Septum verschlossen und die Reaktionslösung unter Rühren auf dem Ölbad bei 85 °C über Nacht zur Polymerisation gebracht. Nach dem Abkühlen auf Raumtemperatur überführt man das Produkt unter Rühren in Diethylether (Glycidylmethacrylat ist in Et₂O löslich, das Produkt in Dioxan). Das Polymer wird in Petri-Schalen im Vakuum-Trockenschrank über P₂O₅ vom Restlösemittel befreit. Die Ausbeute beträgt 93 % der Theorie.

### Beispiel 1.3

### Herstellung von Lösungen für die Blattbildungsversuche

Herstellung von 1 %-igen wässrigen Wirkstoffdispersionen

Eine bestimmte Menge an Polymer (s. Tabelle 2) wurde in 4,5 g Dioxan (Masse s. Tabelle 2) gelöst.

Zu dieser Lösung wurden dann unter intensivem Rühren 45 g Wasser gegeben. Danach wurde sofort die entsprechende Menge Polyethylenimin (PEI) unter Rühren zugefügt. Die Dispersion wurde für weitere 30 Minuten gerührt und war dann einsatzbereit.

Die einzelnen Ansätze sind in Tabelle 2 aufgeführt.

**Tabelle 2**

| | | |
|---|---|---|
| OM 17 - A1 | Triblockcopolymer PGLMA-PEG-PGLMA OM 17 | 0,40 g Polymer |
| | | 0,1 g PEI |
| | | 4,5 g Dioxan |
| OM 18 - B1 | Triblockcopolymer PGLMA-PEG-PGLMA OM 18 | 0,40 g Polymer |
| | | 0,1 g PEI |
| | | 4,5 g Dioxan |
| OM 17 - C1 | Triblockcopolymer PGLMA-PEG-PGLMA OM 17 | 0,35 g Polymer |
| | | 0,15 g PEI |
| | | 4,5 g Dioxan |
| OM 18 - D1 | Triblockcopolymer PGLMA-PEG-PGLMA OM 18 | 0,35 g Polymer |
| | | 0,15 g PEI |
| | | 4,5 g Dioxan |
| OM 17 - E1 | Triblockcopolymer PGLMA-PEG-PGLMA OM 17 | 0,30 g Polymer |
| | | 0,2 g PEI |
| | | 4,5 g Dioxan |
| OM 18 - F1 | Triblockcopolymer PGLMA-PEG-PGLMA OM 18 | 0,30 g Polymer |
| | | 0,2 g PEI |
| | | 4,5 g Dioxan |
| OM 17 - G1 | Triblockcopolymer PGLMA-PEG-PGLMA OM 17 | 0,25 g Polymer |
| | | 0,25 g PEI |
| | | 4,5 g Dioxan |
| OM 18 - H1 | Triblockcopolymer PGLMA-PEG-PGLMA OM 18 | 0,25 g Polymer |
| | | 0,25 g PEI |
| | | 4,5 g Dioxan |

Weiterhin wurden zum Vergleich Lösungen aus PEI und Servamin hergestellt.

Die Ergebnisse sind in Tabelle 3 dargestellt.

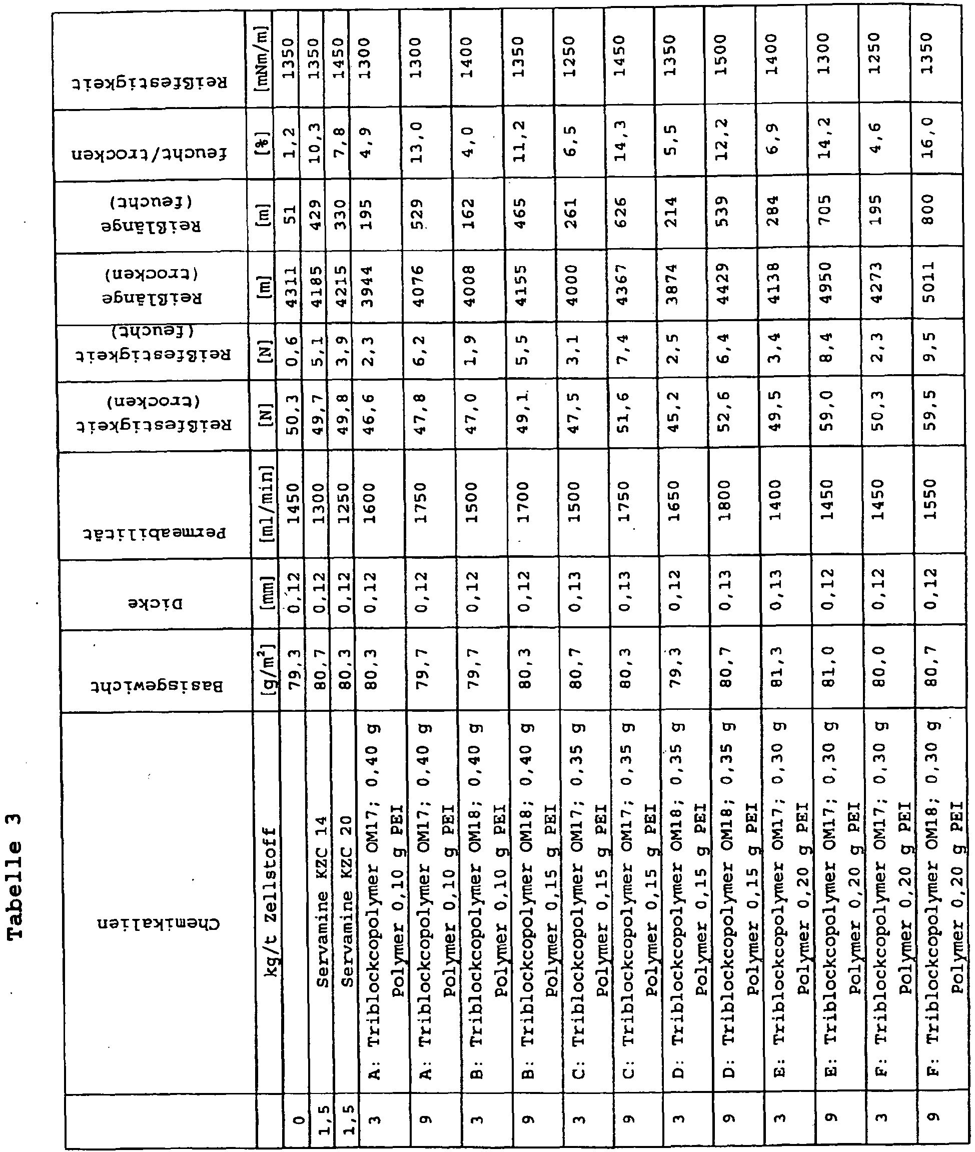

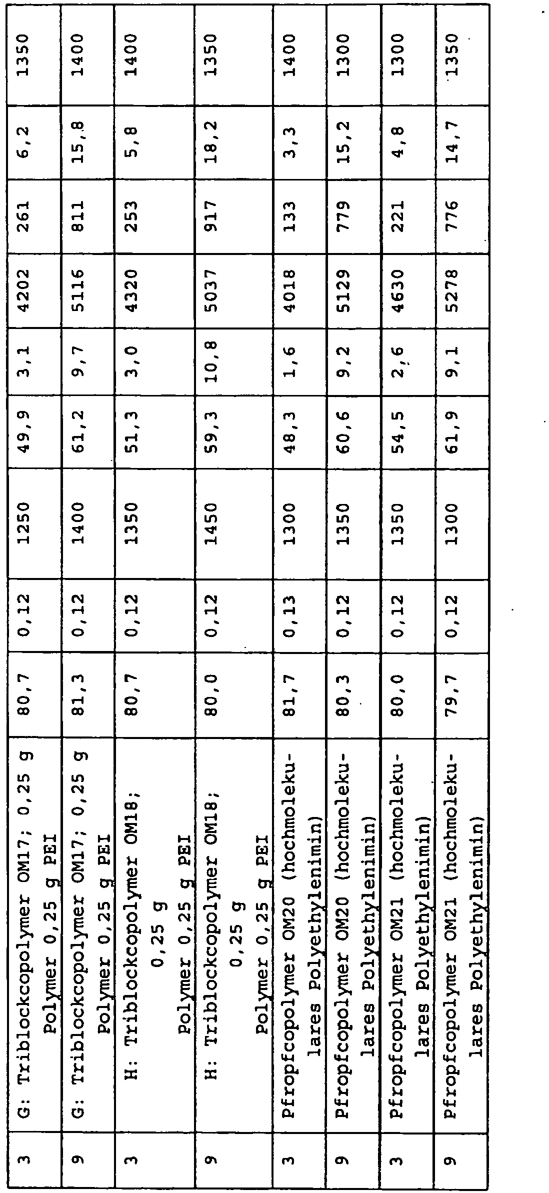

Das Ansetzen der Lösungen kann auch beispielsweise so erfolgen, dass das PEI zuerst zu der Polymerdioxanlösung gegeben wird, und diese anschließend unter Rühren in Wasser gegeben wird oder Wasser unter Rühren zu der Dioxanlösung gegeben wird.

### Beispiel 2

### Synthese von Poly(Glycidylmethacrylat)-Block-Poly(Ethylenglykol)-Block-Poly(Glycidylmethacrylat)

Es wurden die in Tabelle 4 aufgeführten Makro-Azoinitiatoren verwendet.

**Tabelle 4**

| Makro-Azoinitiator | Molekulargewicht [g/mol] | Molekulargewicht des Segments | Mol Azogruppe pro 1 g |
|---|---|---|---|
| VPE-0201 | 15,000-30,000 | 2,000 | 0,45 mmol/g (1/14) |
| VPE-0401 | 25,000-40,000 | 4,000 | 0,24 mmol/g (1/25) |

### 20 %-ige Lösung aus Triblock-Copolymer (Poly(Glycidylmethacrylat)-Block-Poly(Ethylenglykol)-Block-Poly(Glycidylmethacrylat)) in 1,4-Dioxan

280,0 g Macro-Azoinitiator (50,0 g VPE-0401 [WAKO] + 230,0 g VPE-0201 [WAKO] werden erst gut vermischt und dann gleichmäßig auf drei 1 l-Kolben verteilt. Insgesamt 325 g Glycidylmethacrylat [ALDRICH, 97 %] werden zu je einem Drittel (93,3 g) hinzugefügt. Unter N₂-Einleitung gibt man 250 ml 1,4-Dioxan [ACROS, p.a., stabilized] pro Kolben.

Diese Reaktionslösungen werden unter Rühren auf dem Ölbad bei 80 °C über Nacht zur Polymerisation gebracht. Nach dem Abkühlen auf Raumtemperatur werden alle Reaktionslösungen vereinigt und mit 1,4-Dioxan auf 3000 g verdünnt, um eine 20 %-ige Lösung zu erhalten. Sie werden in 2 Flaschen gefüllt (je 1,5 kg) mit Angabe des Trockengehalts. Der Trockengehalt wird mit einer Trocknungswaage [Sartorius Moisture Analyzer] (3 h/120 °C) bestimmt:
- Feststoffgehalt₁ = 20 %
- Feststoffgehalt₂ = 20 %

Herstellung der wässrigen Lösungen:

Es wurde hochmolekulares Polyethylenimin (PEI) (Aldrich (Best.-Nr. 181978, CAS [25987-06-8]) Mw ∼ 75.000, Mn - 60.000, 50 %-ige wässrige Lösung) verwendet, welches vor Versuchsbeginn auf eine 25 %-ige Lösung mit Wasser verdünnt wurde.

### Beispiel 2.1

### Variante 1:1 (Masse Copolymer zu PEI)

### Herstellung einer 0.5 %-igen Lösung:

1.5 kg der ca. 20 %-igen Lösung werden mit 1.2 kg einer 25 %-igen wässrigen PEI-Lösung unter Rühren zusammengegeben und mit 117.2 kg Wasser unter schnellem Rühren (30 min) zu einer 0.5 %-igen Lösung verdünnt.

### Beispiel 2.2

### Variante 1:1.3

1.3 kg der ca. 20 %-igen Lösung werden mit 1.387 kg einer 25 %-igen wässrigen PEI-Lösung unter Rühren zusammengegeben und mit 118.68 kg Wasser unter schnellem Rühren (30 min) zu einer 0.5 %-igen Lösung verdünnt.

Die unter a) und b) hergestellten Lösungen wurden sofort eingesetzt und innerhalb von 7 h zudosiert.

### Beispiel 3

### Papierherstellung mit den in Beispiel 2.1 und 2.2 hergestellten Lösungen

Die in Beispiel 2.1 und 2.2 hergestellten Lösungen wurden an der Stelle X zudosiert, so dass unterschiedliche Wirkstoffkonzentrationen pro Tonne produziertes Papier eingestellt werden konnten. Die Papierherstellung ist schematisch in Fig. 1 dargestellt.

### Verwendeter Zellstoff:

Grapho Celeste TCF Tissue, SCA Hygiene Products AB, Östrand, Schweden
Mahlgrad: 13 SR ungemahlen, 18 SR gemahlen

### Maschinenparameter:

Arbeitsbreite: 0,5 m
Laufgeschwindigkeit: 20 m/min
Differenzgeschwindigkeit Formiersieb: TAD Sieb: -12 % Trocknungsverfahren: UCTAD (uncreped through air dried)
Temperatur Durchströmluft: ca. 100 °C

Der Zellstoff wird in Ballen geliefert. Es wurde jeweils die entsprechende Menge an Zellstoffbögen entnommen, um eine Zellstoffsuspension mit einer Stoffdichte von ca. 3 % zu erhalten. Hierzu wurden ca. 44 Bögen in 800 1 Wasser für 20 Minuten im Pulper aufgeschlagen. Der Mahlgrad der aufgeschlagenen Suspension betrug 13 SR. Anschließend wurde die Zellstoffsuspension mit einer Rezirkuliermahlung solange gemahlen, bis ein Mahlgrad von 18 SR erreicht wurde. Als Mahlaggregat wurde ein Flachkegelrefiner verwendet.

Nach Abschluss der Mahlung wurde die Zellstoffsuspension im Pulper 1 auf eine Stoffdichte von 2,4 % verdünnt und anschließend in die Maschinenbütte 3 überführt. Aus der Maschinenbütte wird die Zellstoffsuspension in den Stoffniveaukasten 5 mit einer Pumpe 4 gepumpt. Die benötigte Menge an Zellstoffsuspension wird über eine Monopumpe 6 in den Vorlagebehälter 7 (Fluffer, HBX-Pump) gepumpt. Der überschüssige Anteil an Stoffsuspension läuft zurück in die Maschinebütte 3. Durch die ständige Bewegung in der Maschinenbütte 3 wird ein Absetzten der Fasern verhindert.

Der Vorlagebehälter 7 ein kleiner Behälter, der mit einem Rührwerk ausgestattet ist. Durch die erzeugte Bewegung wird die Stoffsuspension in den Stoffauflauf gedrückt. Um eine gute Formation zu erhalten, wird die Stoffsuspension auf eine Stoffdichte von ca. 0,5 % verdünnt. Als Verdünnungswasser wird Siebwasser 8 verwendet, das bei der Entwässerung in der Formierzone anfällt.

Aufgrund der hohen Turbulenzen sowie der geringen Stoffdichte im Vorlagebehälter, wurde dieser als Dosierstelle für die Chemikalien ausgewählt. Die Entwässerung der Zellstoffsuspension erfolgt auf einer Langsiebpapiermaschine mittels Siebtisch, Foils und Vakuumkästen. Vom Formiersieb wird die Papierbahn durch einen Vakuumkasten an das TAD-Sieb übergeben, wobei das TAD-Sieb eine um 12 % geringere Geschwindigkeit aufweist. Die sich auf dem TAD-Sieb befindende Papierbahn wird über einen Durchströmtrockenzylinder gefahren. Hier wird ca. 100 °C heiße Luft durch die Papierbahn und das Sieb geblasen, so dass eine Endfeuchte von 5 % an der Aufrollung eingestellt werden kann.

Die so erzeugten Rohmaterialien können auf Verarbeitungslinien zu ein- oder mehrlagigen Küchentüchern verarbeitet werden.

Die dabei erzielten Ergebnisse sind in Tabelle 5 dargestellt.

**Tabelle 5**

| Anzahl der Schichten | | 6 kg/t Variante a | 6 kg/t Variante b | 9 kg/t Variante c | 9 kg/t Variante d |
|---|---|---|---|---|---|
| | | 1 | 1 | 1 | 1 |
| Basisgewicht | g/m² | 22,5 | 21,5 | 22,1 | 21,8 |
| Dicke | µm | 552 | 555 | 565 | 573 |
| Reißfestigkeit md | N/m | 417,5 | 316,7 | 477,5 | 494,3 |
| Reißfestigkeit cd | N/m | 191,9 | 165,1 | 162,8 | 153,0 |
| Dehnung md | % | 14 | 12 | 14 | 15 |
| Dehnung cd | % | 5 | 5 | 5 | 5 |
| Reißfestigkeit md (feucht) | N/m | 52,1 | 43,2 | 69,7 | 61,3 |
| Reißfestigkeit cd (feucht) | N/m | 24,4 | 21,3 | 24,3 | 24,3 |
| rel. Reißfestigkeit md (feucht) | % | 12 | 14 | 15 | 12 |
| rel. Reißfestigkeit cd (feucht) | % | 13 | 13 | 15 | 16 |

Die in der Tabelle genannten Messwerte wurden nach folgenden Methoden bestimmt:
Flächengewicht (basis weight): DIN EN ISO 12625-6
Dicke (thickness): DIN EN ISO 12625-3
Trockenfestigkeit Maschinenrichtung (tensile strength md): DIN EN ISO 12625-4
Trockenfestigkeit Querrichtung (tensile strength cd): DIN EN ISO 12625-4
Dehnung Maschinenrichtung (stretch md): DIN EN ISO 12625-4
Dehnung Querrichtung (stretch cd): DIN EN ISO 12625-4
Nassfestigkeit Maschinenrichtung (wet tensile strength md): DIN EN ISO 12625-5
Nassfestigkeit Querrichtung (wet tensile strength cd): DIN EN ISO 12625-5
Relative Nassfestigkeit = Nassfestigkeit/Trockenfestigkeit

## Patentansprüche

1. Verfahren zur Herstellung flächiger Papiererzeugnisse mit erhöhter relativer Nassreisfestigkeit und Weichheit aus einer Zellstoffsuspension, bei der der Zellstoffsuspension ein Blockcopolymer mit den Blöcken A und B zugesetzt wird und/oder das Papiererzeugnis während seiner Herstellung oder nachträglich mit dem Blockcopolymer behandelt wird, wobei A ein Segment mit mindestens einer kupplungsfähigen Gruppe für Cellulose ist und ein gewichtsmittleres Molekulargewicht im Bereich von 300 bis 3000000 g/mol aufweist und B ein Polyalkylenglykol-Segment der allgemeinen Formel I darstellt, 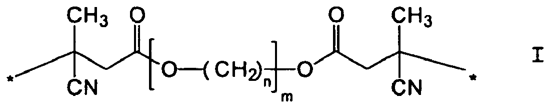 mit n = 2 bis 6 und wobei m so gewählt ist, dass das gewichtsmittlere Molekulargewicht des Segments B im Bereich von 400 bis 50000 g/mol liegt,
**dadurch gekennzeichnet, dass** das Segment A ausgewählt ist aus der Gruppe bestehend aus Glycidyl, Benzylhalogenid, α-Halogenacyl, Isocyanat, Anhydrid, Azid, Tosylat und Mesylat.

2. Verfahren nach einem der vorhergehenden Ansprüche,
**dadurch gekennzeichnet, dass** Segment A ausgewählt ist aus der Gruppe bestehend aus: 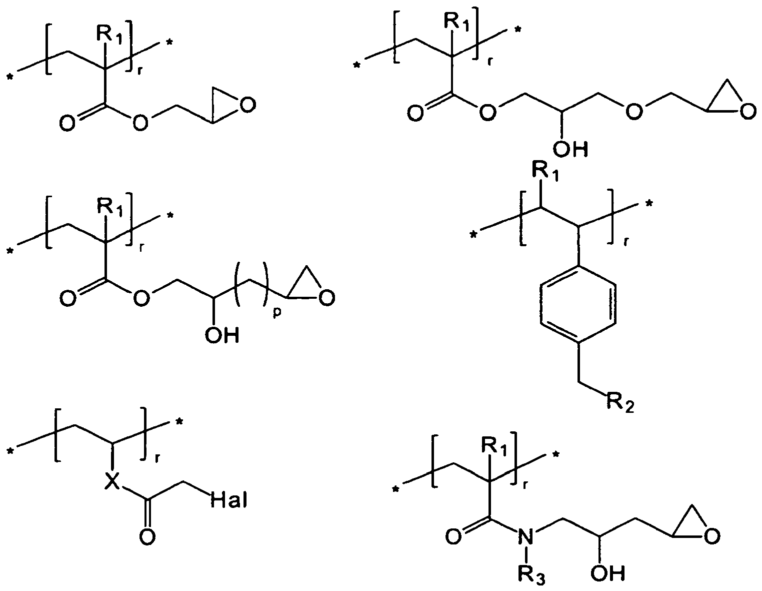 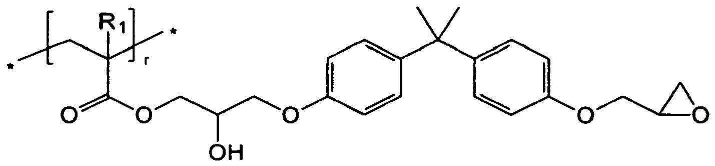 mit p = 1 bis 12, r = 3 bis 3000, R₁ = H oder CH₃ und R₂ = Halogen, Tosylat oder Mesylat, R₃ = H, wenn R₁ = CH₃ und R₃ = CH₃, wenn R₁ = H sowie X = O oder NR₄ mit R₄ = H oder CH₃.

3. Verfahren nach einem der vorhergehenden Ansprüche,
**dadurch gekennzeichnet, dass** das Segment A gebildet ist aus einem Monomer der allgemeinen Formel II, 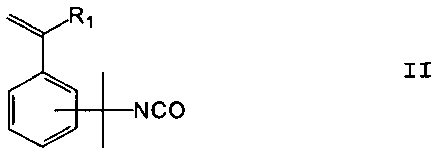 mit R1 = H.

4. Verfahren nach einem der Ansprüche 1 bis 3, **dadurch gekennzeichnet, dass** das Segment A gebildet ist aus einem Monomer der allgemeinen Formel II, 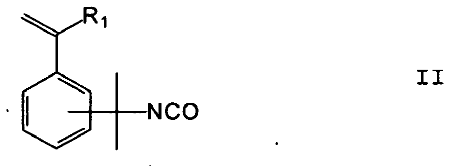 mit R1 = H oder CH₃
zusammen mit mindestens einem weiteren radikalisch polymerisierbaren Comonomer ausgewählt aus der Gruppe bestehend aus aliphatischen und aromatischen Methacrylsäureestern, aliphatischen und aromatischen Acrylamiden und Styrol, die auch mit NR₅, OR₅ und/oder COOR₅ mit R₅ = C₁-C₁₂-Alkyl oder Aryl, substitutiert sein können.

5. Verfahren nach einem der vorhergehenden Ansprüche,
**dadurch gekennzeichnet, dass** das Blockcopolymer zusätzlich mit einem polymeren Amin, insbesondere einem Polyethylenimin und/oder einem Polyvinylamin gekuppelt ist.

6. Verfahren nach dem vorhergehenden Anspruch, **dadurch gekennzeichnet, dass** das Blockcopolymer zusätzlich mit einem Polyethylenimin-Segment der allgemeinen Formel III unter Bildung eines Pfropfcopolymers gekuppelt wird, 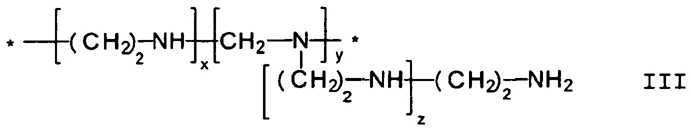 wobei x, y und z so gewählt werden, dass das gewichtsmittlere Molekulargewicht im Bereich von 500 bis 3000000 g/mol, insbesondere 500 bis 1000000 g/mol liegt.

7. Verfahren nach Anspruch 5 oder 6,
**dadurch gekennzeichnet, dass** das Blockcopolymer zusätzlich mit Poly-4-vinylpyridin gekuppelt ist.

8. Verfahren nach einem der Ansprüche 5 bis 7,
**dadurch gekennzeichnet, dass** das Pfropfcopolymer ein Rückgrat aus dem polymeren Amin und Pfröpfe aus dem Blockcopolymer aufweist oder das Pfropfcopolymer ein Rückgrat aus dem Blockcopolymer und Pfröpfe aus dem polymeren Amin aufweist.

9. Papiererzeugnis mit erhöhter relativer Nassreißfestigkeit und Weichheit enthaltend Cellulosefasern, die mit einem Blockcopolymer mit den Blöcken A und B vernetzt sind, wobei A ein Segment mit mindestens einer kupplungsfähigen Gruppe für Cellulose ist und ein gewichtsmittleres Molekulargewicht im Bereich von 300 bis 3000000 g/mol aufweist und
B ein Polyalkylenglykol-Segment der allgemeinen Formel I darstellt, 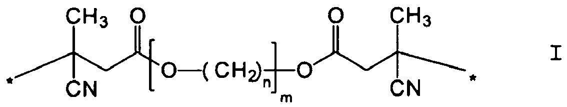 wobei n so gewählt ist, dass das gewichtsmittlere Molekulargewicht des Segments B im Bereich von 400 bis 50000 g/mol liegt,
**dadurch gekennzeichnet, dass** das Segment A ausgewählt ist aus der Gruppe bestehend aus Glycidyl, Benzylhalogenid, α-Halogenacyl, Isocyanat, Anhydrid, Azid, Tosylat und Mesylat.

10. Papiererzeugnis nach Anspruch 9,
**dadurch gekennzeichnet, dass** das Segment A ausgewählt ist aus der Gruppe bestehend aus 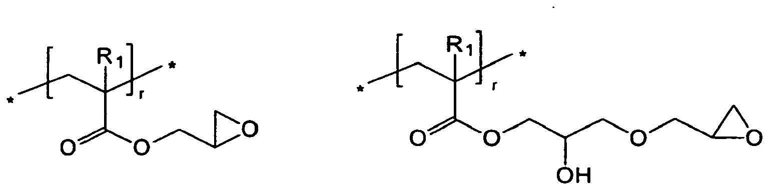 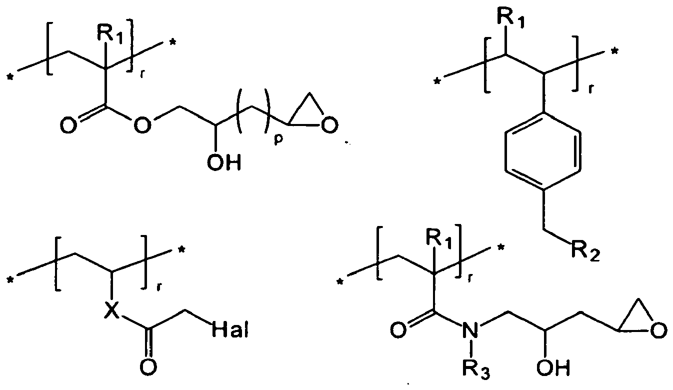 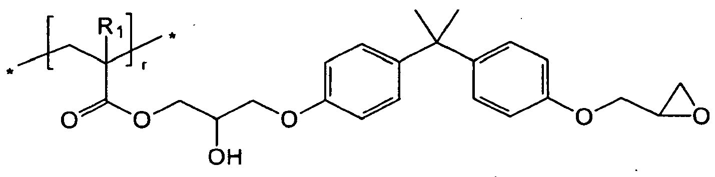 mit p = 1 bis 12, r = 3 bis 3000, R₁ = H oder CH₃ und R₂ = Halogen, Tosylat oder Mesylat,
R₃ = H, wenn R₁ = CH₃ und R₃ = CH₃, wenn R₁ = H sowie X = O oder NR₄ mit R₄ = H oder CH₃.

11. Papiererzeugnis nach einem der Ansprüche 9 oder 10,
**dadurch gekennzeichnet, dass** das Segment A gebildet ist aus einem Monomer der Formel II 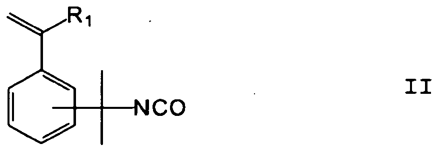 mit R1 = H,
oder das Segment A gebildet ist aus einem Monomer der Formel II 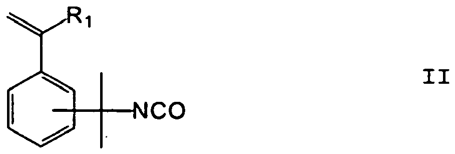 mit R1 = H oder CH₃, zusammen mit mindestens einem weiteren radikalisch polymerisierbaren Comonomer ausgewählt aus der Gruppe bestehend aus aliphatischen und aromatischen Methacrylsäureestern, aliphatischen und aromatischen Acrylamiden und Styrol, die auch mit NR₅, OR₅ und/oder COOR₅ mit R₅ = C₁-C₁₂-Alkyl oder Aryl, substitutiert sein können.

12. Papiererzeugnis nach einem der Ansprüche 9 bis 11,
**dadurch gekennzeichnet, dass** das Blockcopolymer zusätzlich mit einem polymeren Amin, insbesondere einem linearen oder verzweigten Polyethylenimin und/oder einem Polyvinylamin gekuppelt ist.

13. Papiererzeugnis Anspruch 12,
**dadurch gekennzeichnet, dass** das Blockcopolymer zusätzlich mit einem Polyethylenimin-Segment der allgemeinen Formel III unter Bildung eines Pfropfcopolymers gekuppelt ist, 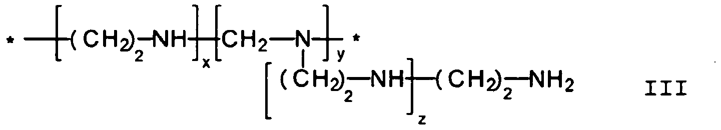 wobei x, y und z so gewählt werden, dass das gewichtsmittlere Molekulargewicht im Bereich von 500 bis 3000000 g/mol, insbesondere 500 bis 1000000 g/mol liegt.

14. Papiererzeugnis nach einem der Ansprüche 12 oder 13,
**dadurch gekennzeichnet, dass** das Blockcopolymer zusätzlich mit Poly-4-vinylpyridin gekuppelt ist.

15. Papiererzeugnis nach einem der Ansprüche 12 bis 14,
**dadurch gekennzeichnet, dass** das Pfropfcopolymer ein Rückgrat aus Polyethylenimin und Pfröpfe aus dem Blockcopolymer oder ein Rückgrat aus dem Blockcopolymer und Pfröpfe aus Polyethylenimin aufweist.

16. Verwendung der Papiererzeugnisse nach einem der Ansprüche 9 bis 15 als Tissue-Produkt.

## Claims

1. Process for the manufacturing of flat paper products having an increased relative wet tear strength and softness from a pulp suspension, in which a block copolymer having the blocks A and B is added to the pulp suspension and/or the paper product is treated with the block copolymer during its manufacture or subsequently, wherein A is a segment having at least one group, which is able to couple to cellulose and has an average molecular weight in the region of 300 to 3 000 000 g/mol, and B represents a polyalkylene glycol segment of the general formula I, 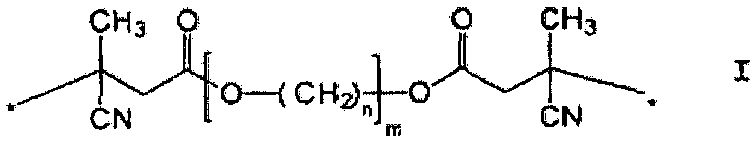 wherein n = 2 to 6 and wherein m is chosen such that the average molecular weight of the segment B lies in the region of 400 to 50000 g/mol,
**characterised in that**, the segment A is selected from the group consisting of glycidyl, benzyl halide, α-halogen acyl, isocyanate, anhydride, azide, tosylate and mesylate

2. Process according to one of the preceding claims, **characterised in that** segment A is selected from the group consisting of: 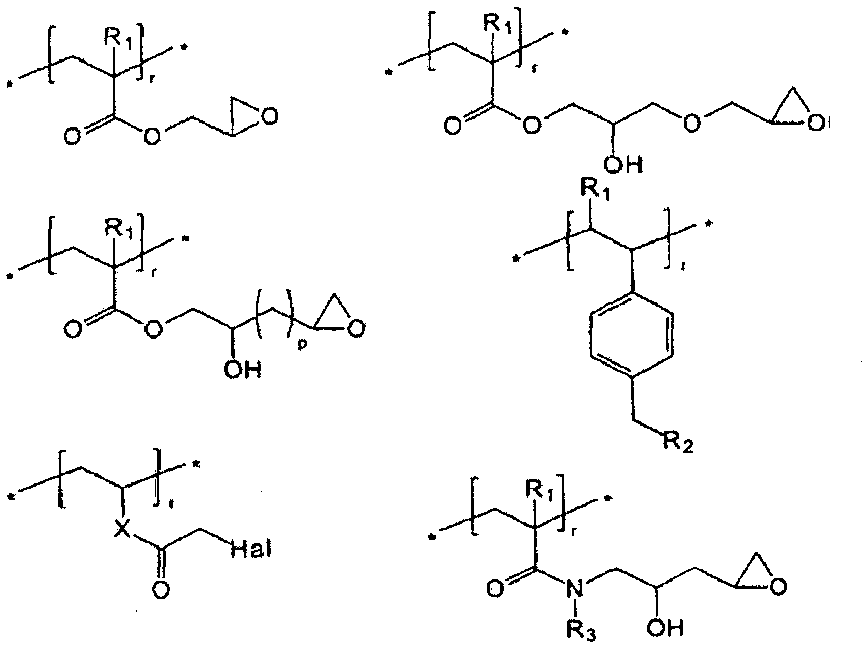 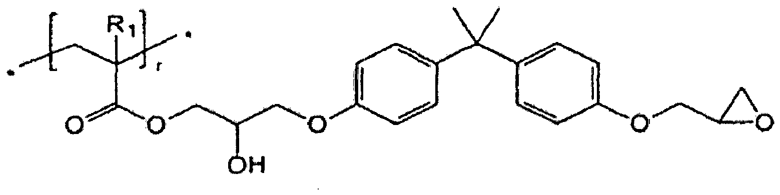 wherein p = 1 to 12, r = 3 to 3000, R₁ = H or CH₃ and R₂ = halogen, tosylate or mesylate, R₃ = H, if R₁ = CH₃ and R₃ = CH₃, if R₁ = H, and X = O or NR₄ wherein R₄ = H or CH₃.

3. Process according to one of the preceding claims, **characterised in that** the segment A is formed from a monomer of the general formula II, 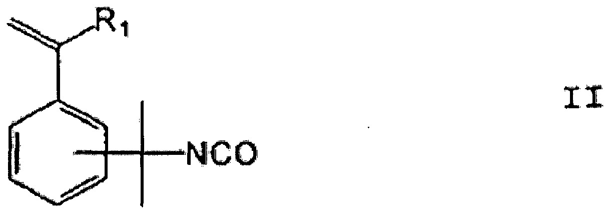 wherein R₁ = H.

4. Process according to one of claims 1 to 3, **characterised in that** the segment A is formed from a monomer of the general formula II, 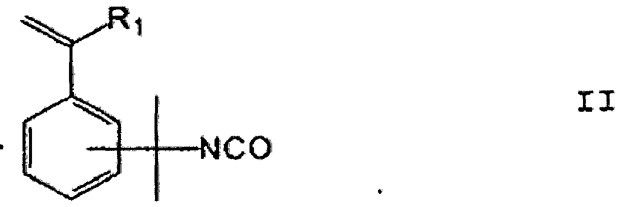 wherein R₁ = H or CH₃
together with at least one further comonomer, which is able to be radically polymerised, selected from the group consisting of aliphatic and aromatic methacrylic acid esters, aliphatic and aromatic acrylamides and styrene, which can also be substituted with NR₅, OR₅ and/or COOR₅, wherein R₅ = C₁-C₁₂-alkyl or aryl.

5. Process according to one of the preceding claims, **characterised in that** the block copolymer is additionally coupled to a polymeric amine, in particular a polyethyleneimine and/or a polyvinylamine.

6. Process according to the preceding claim, **characterised in that** the block copolymer is additionally coupled to a polyethyleneimine segment of the general formula III thus forming a graft copolymer, 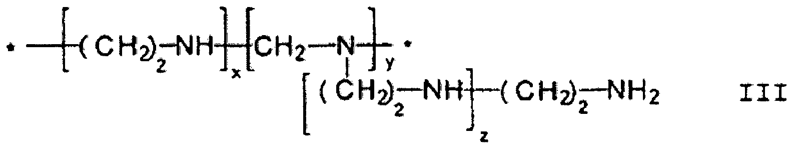 wherein x, y and z are chosen such that the average molecular weight lies in the region of 500 to 3 000 000 g/mol, in particular 500 to 1 000 000 g/mol.

7. Process according to claim 5 or 6,
**characterised in that**, the block copolymer is additionally coupled to poly-4-vinylpyridine.

8. Process according to one of claims 5 to 7, **characterised in that**, the graft copolymer has a backbone made from the polymeric amine and grafts made from the block copolymer or the graft copolymer has a backbone made from the block copolymer and grafts made from the polymeric amine.

9. Paper product with increased relative wet tear strength and softness comprising cellulose fibres, which are cross-linked with a block copolymer having the blocks A and B, wherein A is a segment having at least one group, which is able to couple to cellulose and has an average molecular weight in the region of 300 to 3 000 000 g/mol, and
B represents a polyalkylene glycol segment of the general formula 1, 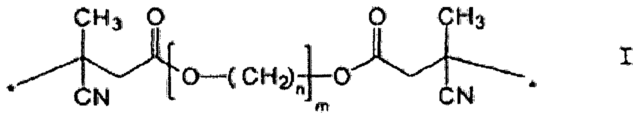 wherein n is chosen such that the average molecular weight of the segment B lies in the region of 400 to 50 000 g/mol,
**characterised in that** the segment A is selected from the group consisting of glycidyl, benzyl halide, α-halogen acyl, isocyanate, anhydride, azide, tosylate and mesylate.

10. Paper product according to claim 9, **characterised in that**, the segment A is selected from the group consisting of 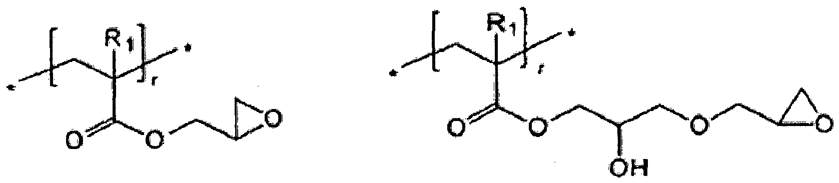 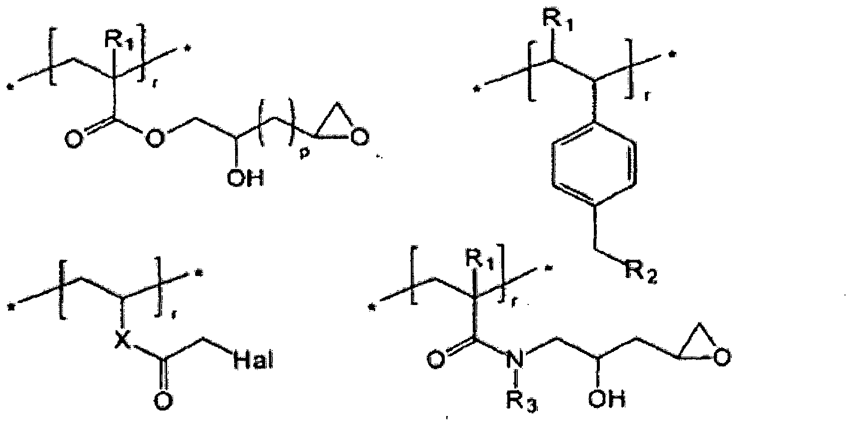 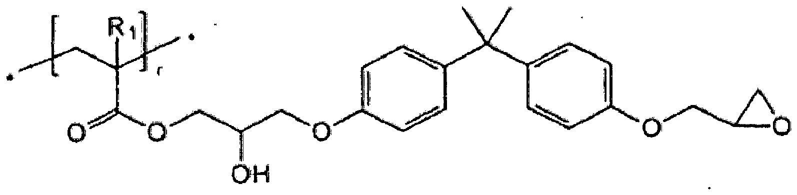 wherein p = 1 to 12, r = 3 to 3000, R₁ = H or CH₃ and R₂ = halogen, tosylate or mesylate, R₃ = H, if R₁ = CH₃ and R₃ = CH₃, if R₁ = H, and X = O or NR₄ wherein R₄ = H or CH₃

11. Paper product according to one of claims 9 or 10, **characterised in that** the segment A is formed from a monomer of the formula II 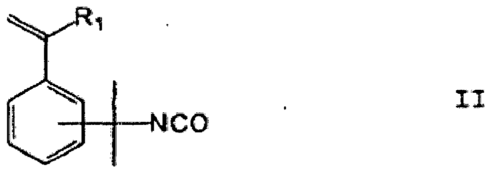 wherein R₁ = H,
or the segment A is formed from a monomer of the formula II 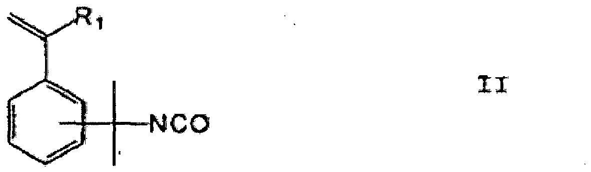 wherein R₁ = H or CH₃, together with at least one further comonomer, which is able to be radically polymerised, selected from the group consisting of aliphatic and aromatic methacrylic acid esters, aliphatic and aromatic acrylamides and styrene, which can also be substituted with NR₅, OR₅ and/or COOR₅, wherein R₅ = C₁-C₁₂-alkyl or aryl.

12. Paper product according to one of claims 9 to 11,
**characterised in that**, the block copolymer is additionally coupled to a polymeric amine, in particular a linear or branched polyethyleneimine and/or a polyvinylamine.

13. Paper product according to claim 12, **characterised in that** the block copolymer is additionally coupled to a polyethyleneimine segment of the general formula III thus forming a graft copolymer, 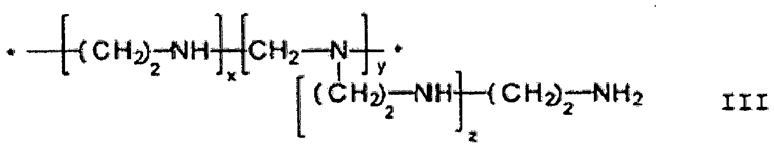 wherein x, y and z are chosen such that the average molecular weight lies in the region of 500 to 3 000 000 g/mol, in particular 500 to 1 000 000 g/mol.

14. Paper product according to one of claims 12 or 13, **characterised in that**, the block copolymer is additionally coupled to poly-4-vinylpyridine.

15. Paper product according to one of claims 12 to 14, **characterised in that**, the graft copolymer has a backbone made from polyethyleneimine and grafts made from the block copolymer or has a backbone made from the block copolymer and grafts made from polyethyleneimine.

16. Use of the paper products according to one of claims 9 to 15 as a tissue product.

## Revendications

1. Procédé de fabrication de produits en papier plats, présentant des valeurs relatives élevées de la résistance à la rupture au mouillé et du moelleux, à partir d'une suspension de cellulose, dans lequel la suspension de cellulose est additionnée d'un copolymère à blocs comportant les blocs A et B, et/ou le produit en papier étant, pendant sa fabrication ou ultérieurement, traité par le copolymère à blocs, A étant un segment présentant au moins un groupe apte au couplage à la cellulose, et présentant une masse moléculaire moyenne en masse située dans la plage allant de 300 à 3 000 000 g/mol, et B représentant un segment de polyalkylèneglycol de formule générale I, 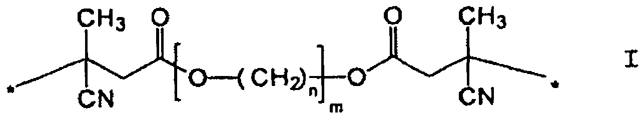 avec n = 2 à 6, et m étant choisi de sorte que la masse moléculaire moyenne en masse du segment B est située dans la plage allant de 400 à 50 000 g/mol,
**caractérisé en ce que** le segment A est choisi dans le groupe comprenant le glycidyle, l'halogénure de benzyle, l'α-halogénacyle, l'isocyanate, l'anhydride, l'azoture, le tosylate et le mésylate.

2. Procédé selon l'une quelconque des revendications précédentes, **caractérisé en ce que** le segment A est choisi parmi le groupe comprenant : 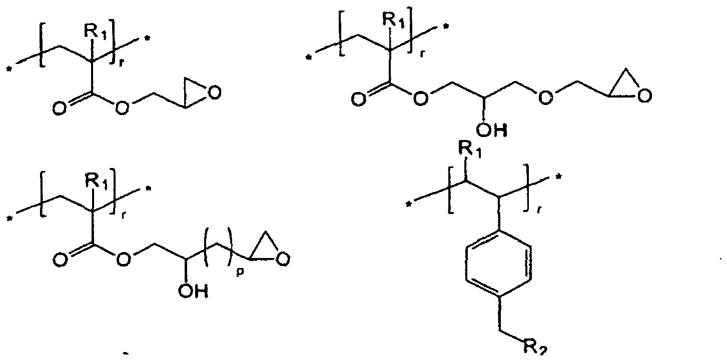 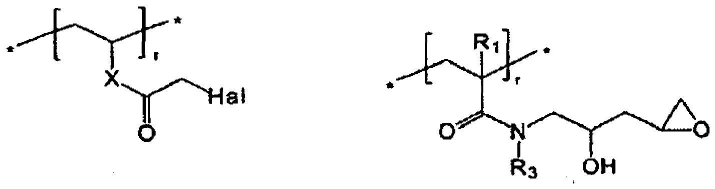 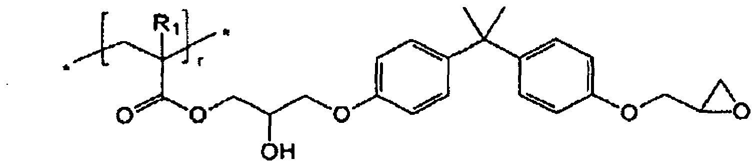 avec p = 1 à 12, r = 3 à 3000, R₁ = H ou CH₃, et R₂ = un halogène, un tosylate ou un mésylate,
R₃ = H, si R₁ = CH₃ et R₃ = CH₃, si R₁ = H, ainsi que X = O ou NR₄, avec R₄ = H ou CH₃.

3. Procédé selon l'une quelconque des revendications précédentes, **caractérisé en ce que** le segment A est formé à partir d'un monomère de formule générale II 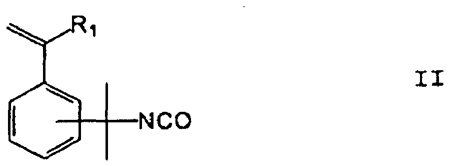 avec R₁ = H.

4. Procédé selon l'une quelconque des revendications 1 à 3, **caractérisé en ce que** le segment A est formé à partir d'un monomère de formule générale II 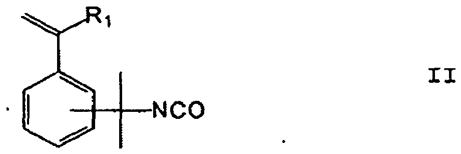 avec R₁ = H ou CH₃,
conjointement avec au moins un autre comonomère polymérisable de manière radicalaire, choisi parmi le groupe comprenant les esters de l'acide méthacrylique aliphatiques et aromatiques, les acrylamides aliphatiques et aromatiques et le styrène, qui peuvent également être substitués par NR₅, OR₅ et/ou COOR₅, avec R₅ = un alkyle en C₁ à C₁₂ ou un aryle.

5. Procédé selon l'une quelconque des revendications précédentes, **caractérisé en ce que** le copolymère à blocs est couplé en outre à une amine polymère, en particulier à une polyéthylèneimine et/ou à une polyvinylamine.

6. Procédé selon la revendication précédente, **caractérisé en ce que** le copolymère à blocs est couplé en outre à un segment de polyéthylèneimine de formule générale III avec formation d'un copolymère greffé, 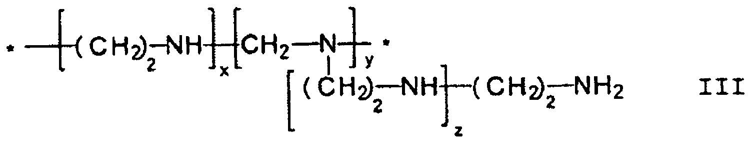 x, y et z étant choisis de sorte que la masse moléculaire moyenne en masse est située dans la plage allant de 500 à 3 000 000 g/mol, en particulier de 500 à 1 000 000 g/mol.

7. Procédé selon la revendication 5 ou 6, **caractérisé en ce que** le copolymère à blocs est couplé en outre à une poly-4-vinylpyridine.

8. Procédé selon l'une quelconque des revendications 5 à 7, **caractérisé en ce que** le copolymère greffé présente une structure composée à partir de l'amine polymère, et des greffons composés à partir du copolymère à blocs, ou le copolymère à blocs présente une structure composée à partir du copolymère à blocs et des greffons composés à partir de l'amine polymère.

9. Produit en papier présentant des valeurs relatives élevées de la résistance à la rupture au mouillé et du moelleux, contenant des fibres de cellulose qui sont réticulées avec un copolymère à blocs comportant les blocs A et B, A étant un segment comportant au moins un groupe apte au couplage à la cellulose, et présentant une masse moléculaire moyenne en masse située dans la plage allant de 300 à 3 000 000 g/mol, et
B est un segment de polyalkylèneglycol de formule générale I 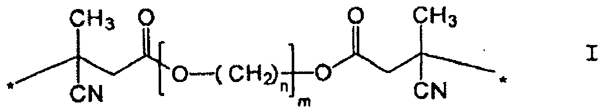 dans laquelle n étant choisi de sorte que la masse moléculaire moyenne en masse du segment B est située dans la plage allant de 400 à 50 000 g/mol,
**caractérisé en ce que** le segment A est choisi parmi le groupe comprenant le glycidyle, l'halogénure de benzyle, l'α-halogènacyle, l'isocyanate, l'anhydride, l'azoture, le tosylate et le mésylate.

10. Produit en papier selon la revendication 9, **caractérisé en ce que** le segment A est choisi parmi le groupe comprenant 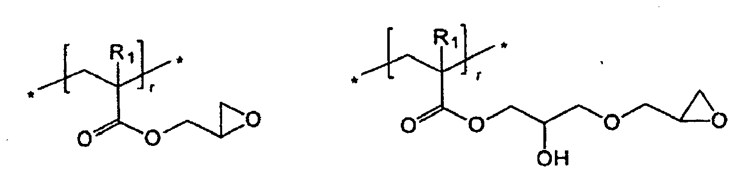 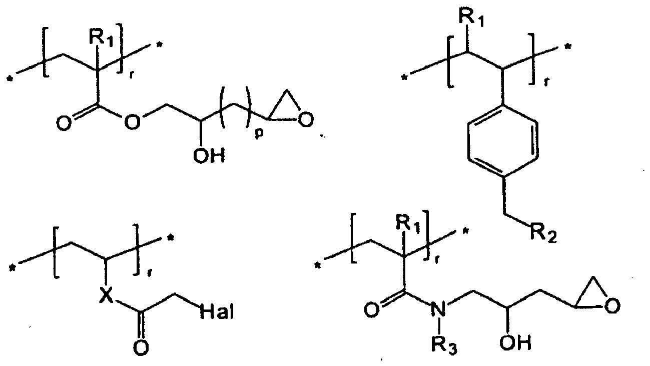 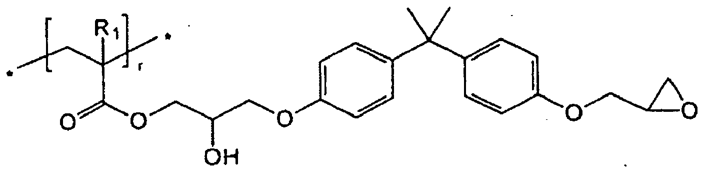 avec p = 1 à 12, r = 3 à 3000, R₁ = H ou CH₃ et R₂ = un halogène, un tosylate ou un mésylate,
R₃ = H, si R₁ = CH₃ et R₃ = CH₃, si R₁ = H, ainsi que X = O ou NR₄, avec R₄ = H ou CH₃.

11. Produit en papier selon l'une quelconque des revendications 9 ou 10, **caractérisé en ce que** le segment A est formé à partir d'un monomère de formule II 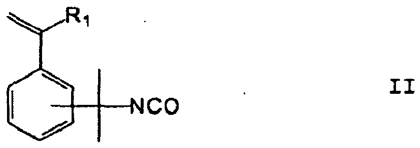 avec R₁ = H,
ou le segment A est formé à partir d'un monomère de formule II 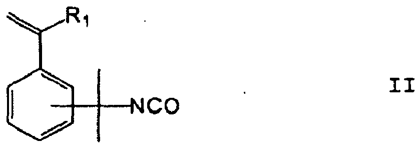 avec R₁ = H ou CH₃, conjointement avec au moins un autre comonomère polymérisable de manière radicalaire, choisi parmi le groupe comprenant les esters de l'acide méthacrylique aliphatiques et aromatiques et les acrylamides aliphatiques et aromatiques et le styrène, qui peuvent aussi être substitués par NR₅, OR₅ et/ou COOR₅, avec R₅ = un alkyle en C₁ à C₁₂ ou un aryle.

12. Produit en papier selon l'une quelconque des revendications 9 à 11, **caractérisé en ce que** le copolymère à blocs est couplé en outre à une amine polymère, en particulier à une polyéthylèneimine à chaîne linéaire ou ramifiée et/ou à une polyvinylamine.

13. Produit en papier selon la revendication 12, **caractérisé en ce que** le copolymère à blocs est couplé en outre à un segment de polyéthylèneimine de formule générale III avec formation d'un copolymère greffé, 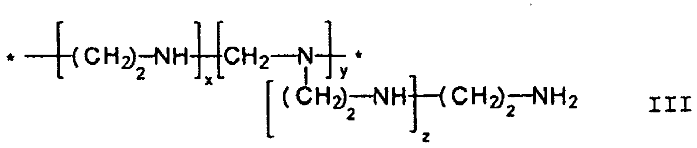 x, y et z étant choisis de sorte que la masse moléculaire moyenne en masse est située dans la plage allant de 500 à 3 000 000 g/mol, en particulier de 500 à 1 000 000 g/mol.

14. Produit en papier selon l'une quelconque des revendications 12 ou 13, **caractérisé en ce que** le copolymère à blocs est couplé en outre à une poly-4-vinylpyridine.

15. Produit en papier selon l'une quelconque des revendications 12 à 14, **caractérisé en ce que** le copolymère greffé présente une structure composée à partir du polyéthylèneimine et des greffons composés à partir du copolymère à blocs, ou une structure composée à partir du copolymère à blocs et des greffons composés à partir du polyéthylèneimine.

16. Utilisation des produits en papier selon l'une quelconque des revendications 9 à 15 en tant que produit en papier tissue.
